# EUROPEAN PATENT SPECIFICATION

(11) **EP 4 574 384 B1**
(45) Date of publication and mention of the grant of the patent: **22.10.2025**
(21) Application number: 23217478.9
(22) Date of filing: 18.12.2023
(51) Int. Cl.: B29C 41/14, A41D 19/015, B29C 41/20, B29C 41/34, D06M 15/564, D06M 15/693, A41D 19/04, B29C 59/02, D06M 23/08, D06N 3/14, B29L 31/48, B29K 33/18, B29K 75/00, B29C 71/00, B29D 99/00

(54) **METHOD FOR MAKING ANTI-SLIP GLOVES**
VERFAHREN ZUR HERSTELLUNG VON GLEITSCHUTZHANDSCHUHEN
PROCÉDÉ DE FABRICATION DE GANTS ANTIDÉRAPANTS

(43) Date of publication of application: 25.06.2025
(73) Proprietor: HuiHong (Nantong) Safety Products Co., Ltd., 226400 Nantong City Jiangsu (CN)
(72) Inventor: LIN, Dongliang, Nantong, Jiangsu 226400 (CN)
(74) Representative: ABG Intellectual Property Law, S.L.

(56) References cited:
- WO-A1-2005/002375
- CN-A- 108 976 534
- CN-A- 109 463 823
- CN-A- 113 563 648
- CN-B- 102 429 331
- CN-B- 109 454 792
- US-A1- 2012 216 377

## Description

### FIELD OF THE DISCLOSURE

The present invention relates to a fabrication process of rubber gloves, and more particularly, to a method for making anti-slip gloves.

### BACKGROUND

In various working conditions such as warehousing and handling, maintenance, and machinery manufacturing, dipped gloves are safety protective gloves that are widely used. Among common dipping materials, nitrile rubber is widely used. Through the mature dipping processes, the stiffness of the gloves is significantly enhanced, but at the same time, the maturation force of the glove lining and rubber material will be reduced, thereby making the entire glove less comfortable to wear.

With reference to the Chinese invention patent CN102429331B, a method for producing water-based PU gloves is disclosed. The PU slurry uses water-based polyurethane resin or a mixed slurry configured with a small amount of water-based thickener, which can improve the softness of the rubber surface closer to the inner lining. But the wear resistance of the gloves is poor and cannot meet industry standards.

Since the existing rubber-dipped gloves are not elastic enough and their slip resistance is greatly reduced in an oily environment, there are potential safety hazards. Most of the existing technical solutions to this problem are to post-process the latex surface to form beads on the latex surface to improve the anti-slip effect, which, however, is labor-intensive and costly.

### SUMMARY OF THE INVENTION

In view of the above technical issues, the object of the present invention is to provide a method for making anti-slip gloves, which uses a mixed glue of vulcanized nitrile rubber and water-based polyurethane glue, and sprays white carbon black and multi-specification salt crystal grains onto the outer rubber surface. By treating the rubber surface layer with white carbon black, the grip force of the gloves in humid and oily environments can be significantly improved while only slightly affecting the wearing comfort. And by dissolving the multi-specification crystal grains, salt pits are synergistically formed on the surface of the rubber to increase the roughness of the rubber surface, which also increases its friction coefficient in humid and oily environments.

To achieve the above objects, the technical solutions adopted by the present invention are as follows.

A method for making anti-slip gloves, comprising the following steps:
a glue dipping process, wherein a hand mold with a glove liner is immersed into a glue, wherein the glove liner is pre-soaked with a coagulant, and the glue is mainly a mixture of a vulcanized nitrile rubber and a water-based polyurethane glue; and,
a salt spraying process, wherein the hand mold with the glove liner is taken out from the glue, and soluble solid particles with a particle size of 60 to 80 meshes are evenly sprayed onto a surface of the glove liner; and,
a frosting treatment, wherein the hand mold with the glove liner after the salt spraying process is dried, and is then immersed in water to dissolve the soluble solid particles; and,
a drying process, wherein the hand mold with the glove liner after the frosting treatment is dried, and then the glove liner is removed from the hand mold to obtain an anti-slip glove;
wherein, the soluble solid particles are pretreated before the salt spraying process by steps: mixing sodium sulfate, sodium chloride and white carbon black according to a mass ratio of (85-90):(9-14):(0.5-1), then further mixing a coupling agent of silane according to a mass ratio of 0.01%-0.05% of the soluble solid particles; wherein the soluble solid particles are used for the salt spraying process at a production line after mixing and drying.

In some embodiments, the glue is also mixed with vaseline, and the vaseline is added at a mass ratio of 1% to 10 % of the total amount of the glue.

In some embodiments, the vulcanized nitrile rubber is prepared by: preparing a vulcanization dispersant; and, adding 5.4 to 5.6 kilograms of the vulcanization dispersant per 100 kilograms of nitrile rubber, to vulcanize the nitrile rubber.

In some embodiments, a formula of the vulcanization dispersant is: 100 parts of water in weight as a basis, and, 14 parts of sulfur, 28 parts of zinc oxide, 7 parts of accelerators, 28 parts of titanium dioxide, 18.6 parts of antioxidants, 3 parts of dispersants, 7 parts of 10% casein, and 10.5 parts of wear-resistant agents; wherein, the above components are weighted, mixed, and grinded with a ball mill to a mesh number below 600, to obtain the vulcanization dispersant.

In some embodiments, the nitrile rubber is vulcanized by steps: weighing an appropriate proportion of the nitrile rubber and the vulcanized dispersant; and, first stirring the nitrile rubber at a uniform speed for a set amount of time, then adding the vulcanized dispersant at a preset speed while stirring, whereby a temperature is kept at 28°C or above during stirring; and, storing for use; wherein, the preset speed is 10kg/min or slower.

In some embodiments, the water-based polyurethane glue is prepared by steps: weighing water-based polyurethane and sodium polyacrylate with a mass ratio of 4:1; stirring and mixing evenly to obtain the water-based polyurethane glue.

In some embodiments, the glue is a foam rubber, and, an appropriate amount of rubber softener is added during a foaming process of the foam rubber, and, the foam rubber prepared has a viscosity of 650-750 mPa.s.

In some embodiments, the glue dipping process specifically comprises:
a first dipping, wherein the hand mold with the glove liner pre-soaked with the coagulant is immersed into the glue, and wherein a palm of the hand mold is facing downward and a dipping depth is at least 10mm; and,
a drying treatment, wherein the hand mold with the glove liner after the first dipping is placed into a hot air furnace, and a hot air of 60-70 °C is blown on the surface of the glove liner for 120 seconds while the hand mold with the glove liner is steadily rotated;
a second dipping, wherein the hand mold with the glove liner after the drying treatment is immersed into the glue again, and wherein the palm of the hand mold is facing downward and a dipping depth is at least 12mm.

In some embodiments, in the frosting treatment, the hand mold with the glove liner is immersed in water for three times, each time for 15 minutes; wherein, water with a room temperature is used for the first time, warm water with a 40°C or higher temperature is used for the second time, and water with a room temperature is used for the third time.

In some embodiments, the method further comprises a weaving process and a pre-soaking process before the dipping process; wherein the weaving process comprises: using finer nylon yarns and moderate spandex yarns to form wrap yarns, then feeding the wrap yarns into a knitting machine through two yarn feeders, and then using a 15-needle glove machine to make the glove liner; and, wherein the pre-soaking process comprises: putting the glove liner onto the hand mold and preheating in an oven at 75-80 °C, and, after the preheating, putting the hand mold with the glove liner into the coagulant for pre-soaking; and, wherein the coagulant is a mixed solution of calcium chloride and methanol with a calcium chloride mass concentration of 1.8%.

The present invention adopting the above technical solutions has at least the following beneficial effects:
1. The method of making anti-slip gloves of the present invention adopts a dipping process of multiple times in a mixture of vulcanized nitrile rubber and water-based polyurethane glue. Wherein, the nitrile rubber can significantly improve the wear resistance of the gloves, but it makes the gloves less comfort. By adding water-based polyurethane glue, the method gives the surface of the gloves higher elasticity, thereby obtaining anti-slip gloves with a comprehensive combination of higher elasticity, oil resistance and wear resistance.
2. In the production method of the anti-slip gloves of the present invention, white carbon black is mixed with the salt in the spray process of the production line. If white carbon black is instead directly added to the latex for vulcanization, the hardness of the entire rubber layer will increase, and, for the rubber on the gloves, such processes will significantly reduce the wearing comfort. In the present invention, by adding white carbon black and coupling agent to sodium sulfate and sodium chloride, and disposing the same onto the rubber surface layer, the wearing comfort is only slightly affected while at the same time, the grip force of the gloves in humid and oily environments is significantly increased.
3. The method of making the anti-slip gloves of the present invention sprays sodium sulfate and sodium chloride crystals of different particle sizes onto the rubber surface, and then dissolves the solid substances to synergistically form salt pits on the rubber surface, so that the gloves have good comfort while also making the surface to form a brushy texture and thereby achieving a better anti-slip effect, significantly improving the friction coefficient especially in humid or oily environments.
4. The method of making anti-slip gloves of the present invention further adds vaseline to the dipping formula to further improve the wearing comfort of the gloves, to prevent flaking, and to improve wear resistance to a certain degree.
5. The anti-slip gloves produced by the method of the present invention have excellent elasticity, and while wearing the gloves, all the joints of the fingers can be flexibly moved like in the case of conventional gloves. While wearing the gloves, the sweat produced at the palms of the hands can seep through the rubber. And a small amount of oil stains in contact with the external surface can be absorbed by the rubber surface but cannot penetrate into the gloves.

### BRIEF DESCRIPTION OF THE DRAWINGS

To explain the technical solutions in the embodiments of the present invention more clearly, the drawings and the designations used in the embodiments will be briefly introduced below. Obviously, the drawings described below are only some embodiments of the present invention. For those of ordinary skill in the art, other drawings can also be obtained based on these drawings without exerting creative efforts.
FIG. 1 is a process flow chart of a method for making anti-slip gloves according to an embodiment of the present invention;
FIG. 2 is a schematic diagram of the device used in test one in the embodiment of the present invention;
FIG. 3 is a schematic diagram of the device used in test two in the embodiment of the present invention.

The meanings of the designations in the figures are as follows:
1-Display screen, 2-Vertical bracket, 3-Stainless steel tube, 4-Sensor, 5-Tested glove, 6-Load.

### DESCRIPTION OF THE ILLUSTRATED EMBODIMENTS

To illustrate the embodiments of the present application or the technical solutions in the prior art more clearly, the specific embodiments of the present application will be described below with reference to the accompanying drawings. Obviously, the accompanying drawings in the following description are only some embodiments of the present application, and for those of ordinary skill in the art, other drawings can also be obtained from these drawings without creative efforts, to obtain other embodiments.

To keep the drawings concise, only the parts related to the application are schematically shown in each figure, and they do not represent the actual structure of the products. In addition, to make the drawings concise and easy to understand, in some figures, only one of the components having the same structure or function is schematically shown, or only one of them is marked. As used herein, "one" not only means "only one", but also "more than one".

It should also be further understood that, as used in this specification and the claims, the term "and/or" refers to and including all possible combinations of one or more of the associated listed items.

In this description, it should be noted that, unless otherwise expressly specified and limited, the terms "installed", "connected" and "connecting" should be understood in a broad sense. For example, it may be a fixed connection or a detachable connection, or it can be connected into a whole piece; or it can be a mechanical connection or an electrical connection; or it can be directly connected or indirectly connected through an intermediate medium, and it can be internal communication between two components. For those of ordinary skill in the art, the specific meanings of the above terms in the present application can be understood in specific situations.

The present invention is further described in detail hereinafter with reference to the accompanying drawings.

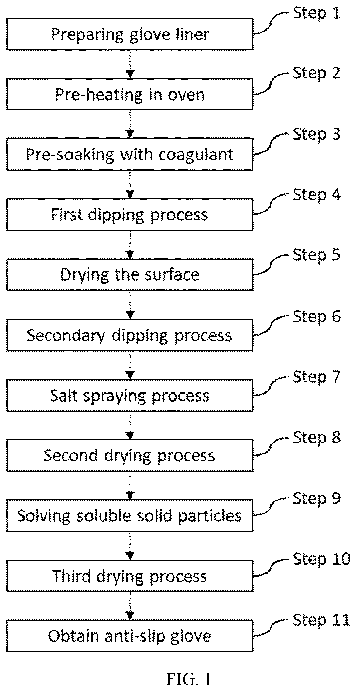

A process and a method for making anti-slip gloves provided by the present invention is shown in FIG. 1, which includes the following steps.

In step 1, fine nylon yarns and moderate spandex yarns are used to form wrap yarns. The wrap yarns are fed through two yarn feeders to a knitting machine, and a glove liner is made by a 15-gauge glove machine. The fine nylon yarns are a nylon yarn of 40D, and the moderate spandex yarns are a spandex of 30D. The nylon yarn of 40D is used as the core yarns and the spandex of 30D is used as the wrap thread, or vise versa. And the wrap yarns are fed in two yarns to the knitting machine, and the glove liner is produced at the 15-gauge glove machine.

The glove liner is produced based on a material of nylon plus spandex. If the nylon and spandex yarns are directly used at the knitting machine, the nylon yarn will be rapidly contracted by the spandex, and therefore the glove liner will become thick. The present invention requires the glove liner to be thin and soft. Therefore, in the present invention, the fine nylon yarns (for example, the nylon yarn of 40D can be selected) and the moderate spandex (for example, the spandex of 30D can be selected) are wrapped together. Then, the wrap is fed in two yarns to the knitting machine to knit an elastic, light, and thin glove liner.

7-gauge, 10-gauge, 13-gauge, 15-gauge, and 18-gauge knitting machines are available, and according to features the gloves in this embodiment and requirements of the yarns, a 15-gauge knitting machine is selected, to enhance the density of yarns of the gloves.

In the configuration of the glove liner, a method different from conventional processes is adopted, so that the glove liner is more elastic, and more fitting for a hand.

In step 2, a hand mold is sleeved with the glove liner and put into an oven of 75°C - 80°C for a pre-heating of 15 minutes.

In step 3, after the pre-heating, the hand mold sleeved with the glove liner is completely immersed into a coagulant.

The coagulant is a mixed solution of calcium chloride and methanol with a concentration of 1.8%. The mixed solution of calcium chloride and methanol with the concentration of 1.8% refers to that, every 100 kg of the mixed solution contains 1.8 kg of calcium chloride, and the rest is methanol.

In step 4, the hand mold sleeved with the glove liner that has been soaked with the coagulant is dipped into a latex, and is immersed into the latex for a depth of at least 10 mm with the palm down. In this application, unless otherwise specified, the latex is alternatively called a glue or a latex glue.

In this embodiment, the latex is a mixture of vulcanized nitrile-butadiene rubber and water-based polyurethane latex. In this application, the nitrile-butadiene rubber is also alternatively called a nitrile rubber.

Features of the nitrile-butadiene rubber include: high abrasion resistance, good heat resistance, desirable oil resistance, and strong cohesion, and the disadvantage thereof is low elasticity.

Features of the water-based polyurethane latex (referred to as water-based polyurethane in brief) include: good hand feel, being environmentally friendly and not easily fractured, desirable low temperature resistance and flexure resistance. When used at the surface of the glove, the water-based polyurethane improves the film-forming property and cohesion strength of the glove significantly, and gives a soft and full hand feel to the texture, and improves wrinkle resistance, resilience, permeability, and heat resistance of the glove. The disadvantage of the water-based polyurethane is poor abrasion resistance.

In the present invention, the water-based polyurethane and the nitrile-butadiene rubber are mixed to endow a combination of high elasticity, oil resistance and abrasion resistance to the surface of the glove.

After the water-based polyurethane and the nitrile-butadiene rubber are mixed based on a certain proportion, the elasticity of the glove surface is improved significantly. However, the flexibility is still unsatisfactory. Regarding the features of the nitrile-butadiene rubber which has a higher content in the mixture, adding a rubber softener is an optimal solution, and the specific process is described below.

In step 5, the surface of the hand mold sleeved with the glove liner that has been soaked with the latex is dried, that is, the hand mold sleeved with the glove liner that has been soaked with the latex is put into a hot blast heater, and a hot blast of 60°C - 70°C is blown onto the surface of the glove liner for 120 seconds under an evenly turning condition.

In step 6, after the surface is dried, the hand mold sleeved with the glove liner is immersed into the latex mentioned in step 4 once again, and is immersed into the latex for a depth of at least 12 mm with the palm down.

In step 7, the hand mold sleeved with the glove liner is taken out from the latex, and soluble solid particles with a particle size of 60 to 80 meshes are sprayed onto the surface evenly. The soluble solid particles are based on sugar, salt or sodium sulfate with a particle size of 60 to 80 meshes.

In one embodiment, the soluble solid particles are pre-prepared by:
Mixing sodium sulfate, sodium chloride and white carbon black according to a mass ratio of (85-90) : (9-14) : (0.5-1), then further mixing a coupling agent of silane in the ratio of 0.01%-0.05% of the total powder weight. After being mixed and dried, the soluble solid particles are ready to be used for the salt spraying process at the production line.

In this embodiment, salt crystals of multiple specifications are sprayed onto the rubber surface. And after dissolution, the salt crystals jointly form salt pits to increase the roughness of the rubber surface and its friction coefficient in humid and oily environments. And, white carbon black and coupling agents are added to sodium sulfate and sodium chloride, to be disposed onto the rubber surface layer, which can significantly increase the grip of the gloves in humid and oily environments while only slightly affecting the wearing comfort.

In step 8, the hand mold sleeved with the glove liner, the surface thereof being sprayed with the soluble solid particles, is baked for drying. That is, the hand mold sleeved with the glove liner, the surface thereof being sprayed with the soluble solid particles, is put into an oven, the temperature of which is maintained at 75°C - 80°C, and is baked for 15 min.

In step 9, the hand mold sleeved with the glove liner, the surface thereof being sprayed with the soluble solid particles and then baked, is dipped into water to dissolve the soluble solid particles. That is, the hand mold is immersed for three times, each time lasting 15 min. For the first time, water of room temperature is used, and for the second time, warm water of 40°C or warmer is used, and for the third time, water of room temperature is used.

Step 8 and step 9 form a frosting treatment process. One of the principal factors affecting the gripping force is the smoothness of the glove surface. Certain roughness contributes to a better slipping resistance of the glove. Soluble solid particles are sprayed onto the surface of the glove liner which then undergoes a secondary latex dipping, and then a rough and fluffy surface is formed after the subsequent baking and dissolving, thereby achieving an optimal slipping resistance.

In step 10, the hand mold sleeved with the glove liner after the frosting treatment is baked for drying. That is, the hand mold sleeved with the glove liner, the surface thereof is rough, is put into an oven. The temperature is maintained at 75°C - 80° C and it is baked for 45 min. And it is further baked for 60 min after the temperature of the oven is adjusted to 90°C - 95°C.

In step 11, the glove liner is taken off from the hand mold, thereby obtaining a glove with an enhanced gripping force and an anti-slip effect.

Based on the above-mentioned technical solution, the viscosity of the latex in steps 4 and 6 is 650 to 750 mPa·s. The latex is a mixture of vulcanized nitrile-butadiene rubber and water-based polyurethane latex. Wherein:
A. A method for preparing the water-based polyurethane latex includes: taking 100 g of water-based polyurethane and 25 g of sodium polyacrylate, and stirring evenly for 60 min at a rotating speed of 80 rad/min.
B. A specific method for preparing the vulcanized nitrile-butadiene rubber is described as follows.

In step 3.1, a vulcanization dispersing agent is prepared according to the following proportioning:

| | |
|---|---|
| Water | 100 kg |
| Sulphur | 14 kg |
| Zinc oxide | 28 kg |
| Accelerator BZ | 7 kg |
| Titanium dioxide | 28 kg |
| Age resistor BHT | 18.6 kg |
| Dispersing agent NF- | 3 kg |
| 10% Casein | 7 kg |
| Abrasion resistor AG-212 | 10.5 kg |

In step 3.2, the components in step 3.1 are mixed and put into a ball grinder for grinding for more than 48 hours until the mesh thereof is below 600, thereby obtaining the vulcanization dispersing agent. Optimally, the dispersing agent is at 650 to 750 meshes.

In step 3.3, an amount of 5.4 kg to 5.6 kg of the vulcanization dispersing agent made in step 3.2 is added into every 100 kg of nitrile-butadiene rubber, and the nitrile-butadiene rubber is vulcanized.

According to the European Union standard EN388, an abrasion resistance index of nitrile-butadiene gloves needs to meet level 4. That is, abrasion cycles on an abrasive paper are more than 8000 cycles. After the water-based polyurethane is added into the nitrile-butadiene rubber, the abrasion resistance is reduced greatly. In this case, the method of adding an abrasion resistor during rubber vulcanization is adopted to solve the problem of abrasion resistance index. Meanwhile, a secondary latex dipping is also an important step to improve the abrasion resistance index.

In a preferred embodiment, vaseline is also added to the latex formula in an amount of 1% to 10% of the total amount of the latex to further improve the wearing comfort of the gloves, to prevent flaking, and to improve wear resistance in a certain degree. Among others, experimental tests have shown that when the addition amount of vaseline is between 4-6%, the wear resistance can be improved by 2000 cycles. When it is less than 4% or higher than 6%, the ability to improve the wear resistance will be reduced. For example, with an addition amount of 2%, the wear resistance is improved by about 500 cycles, and with an addition amount of 10%, the wear resistance is improved by about 1,000 cycles.

Specific steps for vulcanizing the nitrile-butadiene rubber include: taking 180 kg of the nitrile-butadiene rubber and 10 kg of the vulcanization dispersing agent; and first stirring the nitrile-butadiene rubber for 2 hours at a constant stirring speed of 40 rad/min; then slowly pouring the vulcanization dispersing agent at a stirring speed of 80 rad/min, and the temperature is maintained at above 28°C during the stirring and till two hours after the stirring; and settling the mixture for 48 hours for later use. The slowly pouring of the vulcanization dispersing agent refers to that 10 kg of the vulcanization dispersing agent is completely added within 1 minute, corresponding to a speed of 10kg/min or slower.

Based on the above-mentioned technical solution, a mechanical foaming method is adopted for the foaming of the latex. Time, speed, machine power and settling time of the foaming determine the quality of gloves. After many times of experiments, criteria are defined for the above factors, which are specified as follows: 88 kg of vulcanized nitrile-butadiene rubber is added with 12 kg of water-based polyurethane. The mixture is stirred for 10 min and foamed for 10 min, then added with the sodium polyacrylate and tackified to 400 mPa·s, and then added with 12 kg of water at a rotating speed of 600 rad/min, and foamed for 120 min at a constant rotating speed of 200 rad/min, and then added with the sodium polyacrylate and tackified to 700±150 mPa·s, and then added with 4 kg of a rubber softener of AS.TMD-1747 type, and finally stirred for 30 min, to obtain the latex with the viscosity of 650 to 750 mPa·s.

In conclusion, the present invention adopts a combination of water-based polyurethane (water-based PU) and nitrile-butadiene rubber for twice latex dipping of the glove surface. The latex surface is then sprayed with solid soluble particles, and finally the solid soluble particles are dissolved, so that the glove is comfortable, and the surface thereof is fluffy to contribute to a desirable anti-slip effect.

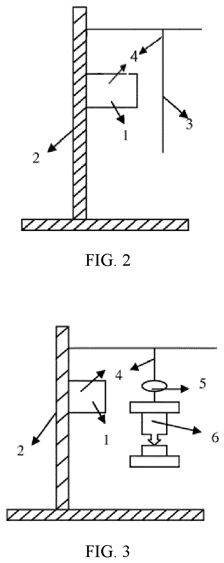

In the present invention, an apparatus shown in FIG. 2 is used to test the produced glove with anti-slip effect. In FIG. 2, a vertical support 2, which is an inverted T-shaped support, is disposed with a screen 1 for displaying measured forces, and a sensor 4. An upper portion of the vertical support 2 is further disposed with another set of T-shaped support formed by a stainless-steel tube 3 with a smooth surface. The sensor 4 is used to measure a tension of the stainless-steel tube 3, and data of the tension or force may be displayed on the screen 1.

A specific experiment is described as follows:
The stainless-steel tube 3 is coated with lubrication oil with a 2.5 cm paint brush until the lubrication oil starts to drop. A tester wears a glove on a right hand and the glove is brushed with a brush dipped with the lubrication oil. It should be noted that, a new glove is used in each test, and the glove is brushed twice from wrist to fingertip. Then, the tester grasps a middle portion of the stainless-steel tube 3 with the right hand. The force displayed on the screen is an anti-slipping force.

The following table shows a group of comparison data in the anti-slipping force test.

| Existing gloves | Gloves of the present invention |
|---|---|
| 7.5 kg | 23.5 kg |
| 7.3 kg | 25.3 kg |
| 7.1 kg | 25.7 kg |
| 7.6 kg | 26.7 kg |
| 7.5 kg | 28.2 kg |

According to the above data of the anti-slipping force, gloves made according to the present invention have a better anti-slip effect in an oily environment. An average force of the existing gloves is 7.4 kg. An average force of the gloves in the present invention is 25.9 kg, and the anti-slipping force thereof is about 3.5 times of the prior art.

In the present invention, another apparatus shown in FIG. 3 is used to test the produced gloves with anti-slip effect. As shown in FIG. 3, a load 6 with a certain weight is hung below a tested glove 5. A normal nitrile-butadiene rubber glove without water-based polyurethane with a length of 24 cm, and a glove with anti-slip effect produced according to the present invention with a length of 24 cm are compared.
1. Stretch Distance.

When a tension reaches 9.5 kg, the glove of the present invention stretches to a limit point, in which the stretched length thereof changes from 24 cm to 43 cm. And a traverse distortion in another test is 12 cm to 21.5 cm.

A stretched length of the normal glove changes from 24 cm to 29 cm, and a traverse distortion is from 12 cm to 15.5 cm.

### 2. Distortion Recovery

The glove of the present invention recovers to about the original shape in 3 seconds.

The normal glove has more deformation, and fails to recover to the original shape.

## Claims

1. A method for making anti-slip gloves, **characterized by** comprising:
a glue dipping process, wherein a hand mold with a glove liner is immersed into a glue, wherein the glove liner is pre-soaked with a coagulant, and the glue is mainly a mixture of a vulcanized nitrile rubber and a water-based polyurethane glue; and,
a salt spraying process, wherein the hand mold with the glove liner is taken out from the glue, and soluble solid particles with a particle size of 60 to 80 meshes are evenly sprayed onto a surface of the glove liner;
a frosting treatment, wherein the hand mold with the glove liner after the salt spraying process is dried, and is then immersed in water to dissolve the soluble solid particles; and,
a drying process, wherein the hand mold with the glove liner after the frosting treatment is dried, and then the glove liner is removed from the hand mold to obtain an anti-slip glove;
**characterized in that**,
the soluble solid particles are pretreated before the salt spraying process by steps:
mixing sodium sulfate, sodium chloride and white carbon black according to a mass ratio of (85-90):(9-14):(0.5-1), then further mixing a coupling agent of silane according to a mass ratio of 0.01%-0.05% of the soluble solid particles; wherein the soluble solid particles are used for the salt spraying process at a production line after mixing and drying.

2. The method according to claim 1, **characterized in that**,
the glue is also mixed with vaseline, and the vaseline is added at a mass ratio of 1% to 10 % of the total amount of the glue.

3. The method according to claim 1 or 2, **characterized in that**,
the vulcanized nitrile rubber is prepared by:
preparing a vulcanization dispersant; and,
adding 5.4 to 5.6 kilograms of the vulcanization dispersant per 100 kilograms of nitrile rubber, to vulcanize the nitrile rubber.

4. The method according to claim 3, **characterized in that**,
a formula of the vulcanization dispersant is:
100 parts of water in weight as a basis, and, 14 parts of sulfur, 28 parts of zinc oxide, 7 parts of accelerators, 28 parts of titanium dioxide, 18.6 parts of antioxidants, 3 parts of dispersants, 7 parts of 10% casein, and 10.5 parts of wear-resistant agents;
wherein, the above components are weighted, mixed, and grinded with a ball mill to a mesh number below 600, to obtain the vulcanization dispersant.

5. The method according to claim 3, **characterized in that**,
the nitrile rubber is vulcanized by steps:
weighing an appropriate proportion of the nitrile rubber and the vulcanized dispersant; and,
first stirring the nitrile rubber at a uniform speed for a set amount of time, then adding the vulcanized dispersant at a preset speed while stirring, whereby a temperature is kept at 28°C or above during stirring; and,
storing for use;
wherein, the preset speed is 10kg/min or slower.

6. The method according to any one of claims 1-5, **characterized in that**,
the water-based polyurethane glue is prepared by steps:
weighing water-based polyurethane and sodium polyacrylate with a mass ratio of 4:1;
stirring and mixing evenly to obtain the water-based polyurethane glue.

7. The method according to any one of claims 1-6, **characterized in that**,
the glue is a foam rubber, and,
an appropriate amount of rubber softener is added during a foaming process of the foam rubber, and,
the foam rubber prepared has a viscosity of 650-750 mPa.s.

8. The method according to any one of claims 1-7, **characterized in that**,
the glue dipping process specifically comprises:
a first dipping, wherein the hand mold with the glove liner pre-soaked with the coagulant is immersed into the glue, and wherein a palm of the hand mold is facing downward and a dipping depth is at least 10mm; and,
a drying treatment, wherein the hand mold with the glove liner after the first dipping is placed into a hot air furnace, and a hot air of 60-70 °C is blown on the surface of the glove liner for 120 seconds while the hand mold with the glove liner is steadily rotated;
a second dipping, wherein the hand mold with the glove liner after the drying treatment is immersed into the glue again, and wherein the palm of the hand mold is facing downward and a dipping depth is at least 12mm.

9. The method according to any one of claims 1-8, **characterized in that**,
in the frosting treatment, the hand mold with the glove liner is immersed in water for three times, each time for 15 minutes; wherein, water with a room temperature is used for the first time, warm water with a 40°C or warmer temperature is used for the second time, and water with a room temperature is used for the third time.

10. The method according to any one of claims 1-9, **characterized by** further comprising a weaving process and a pre-soaking process before the dipping process;
wherein the weaving process comprises: using finer nylon yarns and moderate spandex yarns to form wrap yarns, then feeding the wrap yarns into a knitting machine through two yarn feeders, and then using a 15-needle glove machine to make the glove liner;
and, wherein the pre-soaking process comprises: putting the glove liner onto the hand mold and preheating in an oven at 75-80 °C, and, after the preheating, putting the hand mold with the glove liner into the coagulant for pre-soaking;
wherein the coagulant is a mixed solution of calcium chloride and methanol with a calcium chloride mass concentration of 1.8%.

## Patentansprüche

1. Verfahren zur Herstellung von Gleitschutzhandschuhen, umfassend:
ein Klebertauchprozess, bei dem eine Handform mit einem Handschuhfutter in einen Klebstoff getaucht wird, wobei das Handschuhfutter mit einem Koagulans vorgetränkt ist und der Kleberstoff hauptsächlich eine Mischung aus vulkanisiertem Nitrilkautschuk und einem Polyurethankleber auf Wasserbasis ist; und
ein Salzsprühprozess, wobei die Handform mit dem Handschuhfutter aus dem Klebstoff genommen wird und lösliche Feststoffpartikel mit einer Partikelgröße von 60 bis 80 Mesh gleichmäßig auf eine Oberfläche des Handschuhfutters gesprüht werden;
eine Mattierungsbehandlung, wobei die Handform mit dem Handschuhfutter nach dem Salzsprühverfahren getrocknet und dann in Wasser getaucht wird, um die löslichen Feststoffpartikel aufzulösen; und
einen Trocknungsprozess, wobei die Handform mit dem Handschuhfutter nach der Mattierungsbehandlung getrocknet wird und dann das Handschuhfutter von der Handform entfernt wird, um einen Gleitschutzhandschuh zu erhalten;
**dadurch gekennzeichnet, dass**
die löslichen Feststoffpartikel vor dem Salzsprühprozess durch folgende Schritte vorbehandelt werden:
Mischen von Natriumsulfat, Natriumchlorid und weißem Ruß in einem Massenverhältnis von (85-90):(9-14):(0,5-1), dann weiteres Mischen eines Silan-Haftvermittlers in einem Massenverhältnis von 0,01-0,05 % der löslichen Feststoffpartikel; wobei die löslichen Feststoffpartikel nach Mischen und Trocknen für den Salzsprühprozess in einer Produktionslinie verwendet werden.

2. Verfahren nach Anspruch 1, **dadurch gekennzeichnet, dass**
der Klebstoff weiter mit Vaseline vermischt wird, und die Vaseline in einem Massenverhältnis von 1 % bis 10 % der Gesamtmenge des Klebstoffs hinzugefügt wird.

3. Verfahren nach Anspruch 1 oder 2, **dadurch gekennzeichnet, dass**
der vulkanisierte Nitrilkautschuk hergestellt wird durch:
Herstellen eines Vulkanisationsdispergiermittels; und
Zugabe von 5,4 bis 5,6 Kilogramm des Vulkanisationsdispergiermittels pro 100 Kilogramm Nitrilkautschuk, um den Nitrilkautschuk zu vulkanisieren.

4. Verfahren nach Anspruch 3, **dadurch gekennzeichnet, dass**
die Formel des Vulkanisationsdispergiermittels lautet:
100 Gewichtsteile Wasser als Basis und 14 Teile Schwefel, 28 Teile Zinkoxid, 7 Teile Beschleuniger, 28 Teile Titandioxid, 18,6 Teile Antioxidantien, 3 Teile Dispergiermittel, 7 Teile 10%iges Kasein und 10,5 Teile Verschleißschutzmittel;
wobei die obigen Komponenten gewogen, gemischt und mit einer Kugelmühle auf ein Mesh unter 600 gemahlen werden, um das Vulkanisationsdispergiermittel zu erhalten.

5. Verfahren nach Anspruch 3, **dadurch gekennzeichnet, dass**
der Nitrilkautschuk in folgenden Schritten vulkanisiert wird:
Abwiegen eines geeigneten Anteils des Nitrilkautschuks und des Vulkanisationsdispergiermittels; und
zuerst Rühren des Nitrilkautschuks für eine festgelegte Zeit mit gleichmäßiger Geschwindigkeit, dann Zugabe des Vulkanisationsdispergiermittel mit einer voreingestellten Geschwindigkeit unter Rühren, wobei die Temperatur während des Rührens bei 28 °C oder darüber gehalten wird; und Aufbewahrung zur Verwendung;
wobei die voreingestellte Geschwindigkeit 10 kg/min oder langsamer ist.

6. Verfahren nach einem der Ansprüche 1-5, **dadurch gekennzeichnet, dass**
der Polyurethankleber auf Wasserbasis in folgenden Schritten hergestellt wird:
Abwiegen von wasserbasiertem Polyurethan und Natriumpolyacrylat im Massenverhältnis 4:1;
Rühren und gleichmäßiges Mischen, um den Polyurethankleber auf Wasserbasis zu erhalten.

7. Verfahren nach einem der Ansprüche 1-6, **dadurch gekennzeichnet, dass**
der Klebstoff ein Schaumgummi ist, und,
während eines Aufschäumprozesses des Schaumgummis eine entsprechende Menge Gummiweichmacher zugegeben wird, und
der hergestellte Schaumgummi eine Viskosität von 650-750 mPa.s hat.

8. Verfahren nach einem der Ansprüche 1-7, **dadurch gekennzeichnet, dass**
der Klebertauchprozess umfasst im Einzelnen:
ein erstes Eintauchen, wobei die Handform mit dem Handschuhfutter vorgetränkt mit dem Koagulans in den Klebstoff eingetaucht wird, wobei eine Handfläche der Handform nach unten zeigt und eine Eintauchtiefe mindestens 10 mm beträgt; und
eine Trocknungsbehandlung, wobei die Handform mit dem Handschuhfutter nach dem ersten Eintauchen in einen Heißluftofen gelegt wird und 120 Sekunden lang Heißluft von 60-70 °C auf die Oberfläche des Handschuhfutters geblasen wird, während die Handform mit dem Handschuhfutter stetig gedreht wird;
ein zweites Eintauchen, wobei die Handform mit dem Handschuhfutter nach der Trocknungsbehandlung erneut in den Klebstoff eingetaucht wird, wobei die Handfläche der Handform nach unten zeigt und eine Eintauchtiefe mindestens 12 mm beträgt.

9. Verfahren nach einem der Ansprüche 1-8, **dadurch gekennzeichnet, dass**
bei der Mattierungsbehandlung die Handform mit dem Handschuhfutter dreimal für jeweils 15 Minuten in Wasser getaucht wird, wobei beim ersten Mal Wasser mit Raumtemperatur verwendet wird, beim zweiten Mal warmes Wasser mit einer Temperatur von 40 °C oder mehr und beim dritten Mal Wasser mit Raumtemperatur verwendet wird.

10. Verfahren nach einem der Ansprüche 1-9, **dadurch gekennzeichnet, dass** es ferner einen Webprozess und einen Vortränkenprozess vor dem Klebertauchprozess umfasst;
wobei der Webprozess Folgendes umfasst: Verwenden feinerer Nylongarne und mittelstarker Spandexgarne zum Bilden von Wickelgarnen, anschließendes Zuführen der Wickelgarne in eine Strickmaschine durch zwei Garnzuführungen, und anschließendes Verwenden einer 15-Nadel-Handschuhmaschine zum Herstellen des Handschuhfutters;
und wobei der Vortränkenprozess umfasst: Auflegen des Handschuhfutters auf die Handform und Vorwärmen in einem Ofen auf 75-80 °C, und nach dem Vorwärmen Einlegen der Handform mit dem Handschuhfutter in das Koagulans zum Vortränken;
wobei das Koagulans eine gemischte Lösung aus Calciumchlorid und Methanol mit einer Calciumchlorid-Massenkonzentration von 1,8 % ist.

## Revendications

1. Procédé de fabrication de gants antidérapants, **caractérisé en ce qu'**il comprend :
un procédé de trempage de colle, dans lequel un moule à main avec une doublure de gant est immergé dans une colle, dans lequel la doublure de gant est pré-imbibée d'un coagulant, et la colle est principalement un mélange d'un caoutchouc nitrile vulcanisé et d'une colle polyuréthane à base d'eau ; et,
un procédé de pulvérisation de sel, dans lequel le moule à main avec la doublure de gant est retiré de la colle, et des particules solides solubles d'une granulométrie de 60 à 80 mesh sont pulvérisées uniformément sur une surface de la doublure de gant;
un traitement de matification, dans lequel le moule à main avec la doublure de gant après le procédé de pulvérisation de sel est séché, puis immergé dans l'eau pour dissoudre les particules solides solubles ; et,
un procédé de séchage, dans lequel le moule à main avec la doublure de gant après le traitement de matification est séché, puis la doublure de gant est retirée du moule à main pour obtenir un gant antidérapant ;
**caractérisé en ce que**,
les particules solides solubles sont prétraitées avant le procédé de pulvérisation de sel par étapes :
mélange de sulfate de sodium, de chlorure de sodium et de noir de carbone blanc selon un rapport massique de (85-90):(9-14):(0,5-1), puis mélange supplémentaire d'un agent de couplage de silane selon un rapport massique de 0,01%-0,05% des particules solides solubles ; dans lequel les particules solides solubles sont utilisées pour le procédé de pulvérisation de sel sur une ligne de production après mélange et séchage.

2. Procédé selon la revendication 1, **caractérisé en ce que**
la colle est également mélangée à de la vaseline, et la vaseline est ajoutée dans un rapport massique de 1% à 10 % de la quantité totale de colle.

3. Procédé selon la revendication 1 ou 2, **caractérisé en ce que**
le caoutchouc nitrile vulcanisé est préparé par :
préparer un dispersant de vulcanisation ; et,
ajouter 5,4 à 5,6 kilogrammes du dispersant de vulcanisation pour 100 kilogrammes de caoutchouc nitrile, pour vulcaniser le caoutchouc nitrile.

4. Procédé selon la revendication 3, **caractérisé en ce que**
la formule du dispersant de vulcanisation est :
100 parties d'eau en poids comme base, et 14 parties de soufre, 28 parties d'oxyde de zinc, 7 parties d'accélérateurs, 28 parties de dioxyde de titane, 18,6 parties d'antioxydants, 3 parties de dispersants, 7 parties de caséine à 10 % et 10,5 parties d'agents résistants à l'usure ;
dans lequel les composants ci-dessus sont pesés, mélangés et broyés avec un broyeur à boulets jusqu'à une granulométrie inférieure à 600 mesh, pour obtenir le dispersant de vulcanisation.

5. Procédé selon la revendication 3, **caractérisé en ce que**
le caoutchouc nitrile est vulcanisé par étapes :
peser une proportion appropriée du caoutchouc nitrile et du dispersant de vulcanisation ; et,
remuer d'abord le caoutchouc nitrile à une vitesse uniforme pendant une durée déterminée, puis ajouter le dispersant de vulcanisation à une vitesse prédéfinie tout en remuant, la température étant maintenue à 28 °C ou plus pendant le remuage ; et,
stocker pour utilisation;
dans lequel la vitesse prédéfinie est de 10 kg/min ou moins.

6. Procédé selon l'une quelconque des revendications 1 à 5, **caractérisé en ce que**
la colle polyuréthane à base d'eau est préparée par étapes :
peser du polyuréthane à base d'eau et du polyacrylate de sodium selon un rapport massique de 4:1 ;
remuer et mélanger uniformément pour obtenir la colle polyuréthane à base d'eau.

7. Procédé selon l'une quelconque des revendications 1 à 6, **caractérisé en ce que**
la colle est une mousse de caoutchouc, et,
une quantité appropriée d'adoucissant pour caoutchouc est ajoutée pendant un procédé de moussage de cette mousse de caoutchouc, et,
la mousse de caoutchouc préparée présente une viscosité de 650-750 mPa.s.

8. Procédé selon l'une quelconque des revendications 1 à 7, **caractérisé en ce que**
le procédé de trempage de colle comprend spécifiquement :
un premier trempage, dans lequel le moule à main avec la doublure de gant pré-imbibée de coagulant est immergé dans la colle, et dans lequel une paume du moule à main est tournée vers le bas et une profondeur de trempage est d'au moins 10 mm ; et,
un traitement de séchage, dans lequel le moule à main avec la doublure de gant après le premier trempage est placé dans un four à air chaud, et un air chaud de 60 à 70 °C est soufflé sur la surface de la doublure de gant pendant 120 secondes tandis que le moule à main avec la doublure de gant est en rotation constante ;
un deuxième trempage, dans lequel le moule à main avec la doublure de gant après le traitement de séchage est à nouveau immergé dans la colle, et dans lequel la paume du moule à main est tournée vers le bas et une profondeur de trempage est d'au moins 12 mm.

9. Procédé selon l'une quelconque des revendications 1 à 8, **caractérisé en ce que**
dans le traitement de matification, le moule à main avec la doublure de gant est immergé dans l'eau trois fois, chaque fois pendant 15 minutes ; dans lequel, de l'eau à température ambiante est utilisée pour la première fois, de l'eau chaude à une température de 40 °C ou plus est utilisée pour la deuxième fois, et de l'eau à température ambiante est utilisée pour la troisième fois.

10. Procédé selon l'une quelconque des revendications 1 à 9, **caractérisé en ce qu'**il comprend en outre un procédé de tissage et un procédé de pré-imbibage avant le procédé de trempage ;
dans lequel le procédé de tissage comprend : former des fils d'enroulement en utilisant des fils de nylon plus fins et des fils de spandex modérés ; alimenter les fils d'enroulement dans une machine à tricoter via deux alimentateurs de fils ; fabriquer la doublure de gant à l'aide d'une machine à gants à 15 aiguilles ;
et, dans lequel le procédé de pré-imbibage comprend : placer la doublure de gant sur le moule à main et préchauffer dans un four à 75-80 °C, et, après le préchauffage, placer le moule à main avec la doublure de gant dans le coagulant pour pré-imbibage ;
dans lequel le coagulant est une solution mixte de chlorure de calcium et de méthanol avec une concentration massique de chlorure de calcium de 1,8 %.
